# EUROPÄISCHE PATENTSCHRIFT

(11) **EP 3 669 657 B1**
(45) Veröffentlichungstag und Bekanntmachung des Hinweises auf die Patenterteilung: **07.06.2023**
(21) Anmeldenummer: 19188439.4
(22) Anmeldetag: 25.07.2019
(51) Int. Cl.: A21D 13/48, A47G 21/18, A23L 7/109

(54) **ESSBARES UTENSIL ZUM VERZEHR EINER NAHRUNG UND VERFAHREN ZUR HERSTELLUNG EINES ESSBAREN UTENSILS**
EDIBLE UTENSIL FOR CONSUMPTION OF FOOD AND METHOD FOR PRODUCING AN EDIBLE UTENSIL
USTENSILE COMESTIBLE DESTINÉ À LA CONSOMMATION D'UN ALIMENT ET PROCÉDÉ DE FABRICATION D'UN USTENSILE COMESTIBLE

(30) Priorität: 20.12.2018 DE 202018107352 U
(43) Veröffentlichungstag der Anmeldung: 24.06.2020
(73) Patentinhaber: Zippel, Christian, 93073 Neutraubling (DE)
(72) Erfinder: Zippel, Christian, 93073 Neutraubling (DE)
(74) Vertreter: Leffers, Thomas

(56) Entgegenhaltungen:
- EP-A1- 2 873 354
- WO-A1-96/20604
- GB-A- 865 615
- US-A1- 2005 037 112
- US-A1- 2005 109 857

## Beschreibung

Die vorliegende Offenbarung beschreibt ein essbares Utensil zum Verzehr einer Nahrung. Insbesondere betrifft die vorliegende Offenbarung ein essbares Utensil zum Verzehr einer flüssigen oder zähflüssigen Nahrung und ein Verfahren zu dessen Herstellung.

Die vorliegende Erfindung bezieht sich auf ein Verfahren zur Herstellung eines essbaren Utensils gemäß den Merkmalen des Anspruchs 1.

Es sind essbare Utensilien zum Verzehr einer Nahrung bekannt.

Die bekannten essbaren Utensilien weisen eine begrenzte Funktionstüchtigkeit und einen komplexen Aufbau auf.

Aus der Druckschrift WO 96/20604 A1 ist ein Verfahren zur Herstellung eines essbaren Utensils bekannt, wobei ein länglicher Körper bereitgestellt wird und der längliche Körper thermisch behandelt wird.

Aus der Druckschrift US 2005/0037112 A1 ist ein Verfahren zur Herstellung eines essbaren Utensils bekannt, wobei ein länglicher Körper bereitgestellt wird und der längliche Körper thermisch behandelt wird.

Aus der Druckschrift GB 865 615 A ist ein essbarer Strohhalm bekannt, welcher aus Nudelteig, beispielsweise einem Maccheroniteig hergestellt und anschließend nach Fertigstellung mit Öl bestrichen werden kann.

Aus der Druckschrift US 2005/0109857 A1 ist ein essbarer Strohhalm bekannt, welcher aus verschiedenen Inhaltsstoffen gefertigt ist.

Aus der Druckschrift EP 2 873 354 A1 ist ein Strohhalm mit einer funktionellen Erweiterung bekannt, wobei der Strohhalm und die funktionelle Erweiterung nach Herstellung zusammengesteckt werden.

Es besteht Bedarf, verbesserte essbare Utensilien bereitzustellen.

In der vorliegenden Offenbarung wird ein essbares Utensil zum Verzehr einer Nahrung, insbesondere einer flüssigen oder zähflüssigen Nahrung vorgeschlagen. Das essbare Utensil umfasst einen länglichen Körper mit einem ersten Ende, insbesondere zum Eindringen in die zu verzehrende Nahrung, mit einem dem ersten Ende gegenüberliegenden zweiten Ende, insbesondere zur Halterung mit der Hand bzw. mit dem Mund, und mit einer Oberfläche. Der längliche Körper ist derart ausgebildet bzw. dimensioniert, dass das essbare Utensil als ein Essutensil zur Nahrungsaufnahme verwendbar ist.

Der längliche Körper weist ein Nudelteig bzw. ein nudelteigbasiertes Material auf und ist einer derartigen thermochemischen Behandlung unterzogen, dass das essbare Utensil sowohl während der Einnahme der flüssigen Nahrung als auch nach der Einnahme der flüssigen Nahrung wie eine leicht bekömmliche Teigware verzehrbar ist.

Der längliche Körper kann beispielsweise als massiver Körper und/oder als Hohlkörper ausgebildet sein. Insbesondere kann der längliche Körper als ein Besteckteil, wie Löffel, Gabel, Messer, Spieß o.ä. und/oder als ein Utensil zum Trinken oder Schlürfen einer flüssigen bzw. zähflüssigen Nahrung ausgebildet sein.

Die thermochemische Behandlung umfasst ein Versehen des länglichen Körpers mit einem Öl bzw. mit einer ölhaltigen Substanz. Durch die thermochemische Behandlung des länglichen Körpers unter Verwendung eines Öls kann insbesondere eine richtige bzw. gewünschte Konditionierung des Körpers erzielt werden, so dass der Körper weder zu hart zum Verzehr noch zu weich dafür wird, als Essutensil eingesetzt zu werden.

Durch das Versehen des länglichen Körpers mit dem Öl kann es zu einer Einwirkung des Öls auf das nudelteigbasierte Material kommen, wodurch die elastischen Eigenschaften des nudelteigbasierten Materials bzw. des länglichen Körpers beeinflusst werden können.

Das Versehen des länglichen Körpers mit dem Öl kann ein Besprühen der Oberfläche bzw. Außenfläche des länglichen Körpers mit dem Öl in pulverisierter Form umfassen. Das Besprühen der Oberfläche des länglichen Körpers kann insbesondere durch Aufsprühen bzw. Aufsprayen des Öls erfolgen. Durch das Aufsprayen des Öls kann das Versehen des teighaltigen Körpers mit dem Öl auf einfache Weise erfolgen, ohne dabei den zu besprühenden Körper nennenswerten mechanischen Belastungen auszusetzen.

In einigen Ausführungsformen umfasst das Versehen des länglichen Körpers mit dem Öl ein Bestreichen bzw. Bepinseln des länglichen Körpers. Das Bestreichen der Oberfläche bzw. Außenfläche des länglichen Körpers kann auf einfache Weise beispielsweise mit einem Öl-Pinsel ohne spezielle Zusatzvorrichtungen erfolgen.

Das Besprühen, insbesondere mit einer Dosierdüse, bzw. das Bestreichen des länglichen Körpers mit einem Öl-Pinsel erlaubt es, das Öl fein zu dosieren, so dass die erwünschte Konditionierung des essbaren Utensils erzielt werden kann.

Das Versehen des länglichen Körpers mit dem Öl kann ein wenigstens teilweises Eintunken bzw. Eintauchen des länglichen Körpers in das Öl umfassen. Das Eintunken bzw. Eintauchen des länglichen Körpers in das Öl ist insbesondere für eine Massenproduktion des essbaren Utensils geeignet, in dem mehrere längliche Körper gleichzeitig mit dem Öl versehen werden können.

Das Öl kann mit wenigstens einem Aroma-, Geschmacks-, Farbstoff oder löslichem Zucker bzw. Zuckersirup versetzt sein. Durch Zusatz von Aroma-, Geschmacks- und/oder Farbstoffen kann dem Benutzer eine Vielfalt an Erfahrungen mit dem essbaren Utensil angeboten werden. Alternativ oder zusätzlich kann Nudelteig bzw. nudelteigbasiertes Material mit wenigstens einem Aroma-, Geschmacks und/oder Farbstoff versetzt werden.

Gemäß der Erfindung weist das essbare Utensil einen hohlen im Wesentlichen rohrförmigen Körper mit einer im Wesentlichen schlauchförmig ausgebildeten Außenfläche und mit einer im Wesentlichen koaxial zu der Außenfläche ausgebildeten, einen Nahrungsflusskanal bildenden, Innenfläche auf, wobei der längliche Körper derart dimensioniert ist, dass das essbare Utensil als ein Trinkhalm zur Einnahme einer flüssigen Nahrung durch den Nahrungsflusskanal verwendbar ist.

Unter der flüssigen Nahrung wird auch zähflüssige Nahrung verstanden, welche grundsätzlich mit einem Trinkhalm verspeist werden kann.

Das Versehen des länglichen Körpers mit dem Öl kann ein wenigstens teilweises Versehen einer Innenwand des Nahrungsflusskanals mit dem Öl umfassen. Insbesondere kann die Innenwand des hohlen im Wesentlichen rohrförmigen Körpers mit einem Pinsel und/oder durch ein, insbesondere anisotropes bzw. gerichtetes Einsprühen des Öls erfolgen. Auch beim Eintunken bzw. Eintauchen des länglichen Körpers in das Öl kann das Öl über das erste Ende bzw. über das zweite Ende des länglichen Körpers in den Nahrungsflusskanal hineingelangen, so dass auch die Innenfläche des hohlen im Wesentlichen rohrförmigen Körpers dem Öl ausgesetzt wird.

Durch das Versehen der Innenwand des Nahrungsflusskanals mit dem Öl kann die Elastizität des rohrförmigen Körpers erhöht werden. Die thermochemische Behandlung des länglichen Körpers umfasst ein Backen des länglichen Körpers, insbesondere in einem Backofen. Das Backen kann dem essbaren Utensil eine angenehme Knusprigkeit verleihen. Durch die Verwendung eines Backvorgangs kann eine im Wesentlichen gleichmäßige thermische Behandlung des rohrförmigen Körpers gewährleistet werden.

Durch den Backvorgang kann das Einwirken des Öls auf das nudelteigbasierte Material beschleunigt werden, so dass der längliche Körper zu einer optimalen elastisch-knusprigen Kondition gebracht werden kann.

Das essbare Utensil kann insbesondere an dem ersten Ende und/oder an dem zweiten Ende des länglichen Körpers, eine funktionelle Erweiterung aufweisen. Insbesondere kann das erste Ende und/oder das zweite Ende als ein Griff, als Schöpfer, als Schaufel umgeformt sein.

In einigen Ausführungsformen weist das essbare Utensil ein abgeflachtes Ende auf, so dass das essbare Utensil sowohl als ein Trinkhalm als auch als Löffel einsetzbar ist. Durch eine derartige funktionelle Erweiterung kann das essbare Utensil vielseitig eingesetzt werden.

Die funktionelle Erweiterung kann insbesondere durch Umformung bzw. Deformation des im Wesentlichen rohrförmigen Körpers, insbesondere nach dem Einölen und/oder nach während bzw. nach dem Backen erfolgen.

Die funktionelle Erweiterung kann auch als ein Aufsatz ausgebildet sein, der nachträglich auf den hohlen im Wesentlichen rohrförmigen Körper aufsetzbar ist.

Der hohle im Wesentlichen rohrförmige Körper ist aus einer rohen Maccheroni-Nudel, insbesondere aus einer handelsüblichen Maccheroni-Nudel ausgebildet. Die rohen Maccheroni-Nudeln haben in der Regel bereits eine geeignete Form und Dimensionierung, um als Strohhalm bzw. Trinkhalm verwendet zu werden. Zudem sind die handelsüblichen rohen Maccheroni-Nudeln ohne Weiteres erhältlich. Durch die Verwendung von rohen Maccheroni-Nudeln als Basis für die Herstellung des hohlen im Wesentlichen rohrförmigen Körpers, kann das essbare Utensil somit einfach und ohne großen Aufwand hergestellt werden.

Ferner wird ein Verfahren zur Herstellung eines essbaren Utensils angegeben, umfassend:
- Bereitstellen eines länglichen Körpers in Form eines Essutensils, welcher ein Nudelteig- Bzw. nudelteigbasiertes Material aufweist, wobei der längliche Körper eine rohe Maccheroni-Nudel ist (60);
- chemische Behandlung des länglichen Körpers (65); und
- nach der chemischen Behandlung des länglichen Körpers, thermische Behandlung des chemisch behandelten länglichen Körpers (70),
wobei das essbare Utensil ein Trinkhalm ist, wobei die chemische Behandlung des länglichen Körpers (65) ein Versehen des länglichen Körpers mit einem Öl oder einer ölhaltigen Substanz umfasst, wobei die thermische des länglichen Körpers (70) ein Backen des Körpers umfasst und wobei eine derartige Konditionierung des Trinkhalms erreicht wird, dass es sowohl während einer Einnahme einer flüssigen Nahrung als auch nach der Einnahme der Nahrung wie eine leicht bekömmliche Teigware verzehrbar ist.

Das Einölen kann insbesondere das Versehen der Oberfläche bzw. Außenfläche des länglichen Körpers mit einer Ölbeschichtung- bzw. mit einer die ölhaltige Substanz enthaltenden Beschichtung umfassen. Das Einölen der Außenfläche kann insbesondere durch Bestreichen der Außenfläche mit einem Öl-Pinsel erfolgen. Das Bestreichen des hohlen im Wesentlichen rohrförmigen Körpers mit einem Öl-Pinsel erlaubt es, das Öl fein zu dosieren, so dass die erwünschte Konditionierung des essbaren Utensils erzielt werden kann.

Das Einölen kann insbesondere ein Besprühen des länglichen Körpers umfassen, wobei das Öl mit einer Sprühvorrichtung pulverisiert wird und aufgesprayt bzw. aufgesprüht wird. Durch das Aufsprayen des Öls kann das Versehen des teighaltigen Körpers mit dem Öl auf einfache Weise erfolgen, ohne dabei den zu besprühenden Körper nennenswerten mechanischen Belastungen auszusetzen.

Das Einölen kann ferner durch ein Eintunken bzw. Eintauchen des rohrförmigen Körpers in ein Ölbad erfolgen. Dabei kann das Öl bzw. die ölhaltige Substanz über das erste Ende und/oder über das zweite Ende des hohlen rohrförmigen Körpers in den Flusskanal bzw. Nahrungsflusskanal hineingelangen, so dass auch die Innenfläche des hohlen im Wesentlichen rohrförmigen Körpers dem Öl bzw. der ölhaltigen Substanz ausgesetzt wird, wodurch eine hohe Elastizität des rohrförmigen Körpers erzielt werden kann.

Als Öl kann insbesondere ein pflanzliches Speiseöl, wie beispielsweise Sonnenblumenöl, Rapsöl, Olivenöl o.ä. genommen werden. In einigen Ausführungsformen umfasst die chemische Behandlung ein Einwirken des Öls bzw. der ölhaltigen Substanz auf den hohlen im Wesentlichen rohrförmigen Körper für eine vordefinierte Zeit, insbesondere für 5 bis 25 Minuten bei einer vordefinierten Temperatur, insbesondere bei Raumtemperatur (ca. 20°).

Die thermische Behandlung umfasst ein Backen des eingeölten Körpers, das insbesondere in einem Backofen durchgeführt wird. In einigen Ausführungsformen umfasst das Verfahren ein Bereitstellen einer funktionellen Erweiterung des essbaren Utensils. Die funktionelle Erweiterung kann insbesondere eine Umformung des ersten Endes und/oder des zweiten Endes des länglichen Körpers bzw. des hohlen rohrförmigen Körpers umfassen. Insbesondere kann das erste Ende und/oder das zweite Ende als ein Griff, als Schöpfer und/oder als Schaufel bzw. Löffel umgeformt sein.

In einigen Ausführungsformen wird die funktionelle Erweiterung durch ein Zusatzteil bzw. durch Aufsetzen eines Zusatzteiles auf das erste Ende bzw. auf das zweite Ende des rohförmigen Körpers bereitgestellt.

Ferner wird eine funktionelle Erweiterung einer Maccheroni-Nudel vorgesehen, der als Aufsatz zum Anbringen an einem von beiden Enden einer Maccheroni-Nudel ausgebildet ist.

Die Erfindung wird nun anhand der beigefügten Figuren näher erläutert. Für gleiche oder gleichwirkende Teile werden in den Figuren gleiche Bezugszeichen verwendet.
- Fig. 1: zeigt eine schematische perspektivische Ansicht eines essbaren Utensils gemäß einem Ausführungsbeispiel,
- Fig. 2: zeigt einen schematischen Querschnitt eines essbaren Utensils gemäß einem Ausführungsbeispiel,
- Fig. 3: zeigt eine perspektivische Ansicht eines essbaren Utensils gemäß einem weiteren Ausführungsbeispiel, und
- Fig. 4: zeigt ein Flussdiagram eines Verfahrens zur Herstellung eines essbaren Utensils gemäß einem Beispiel.

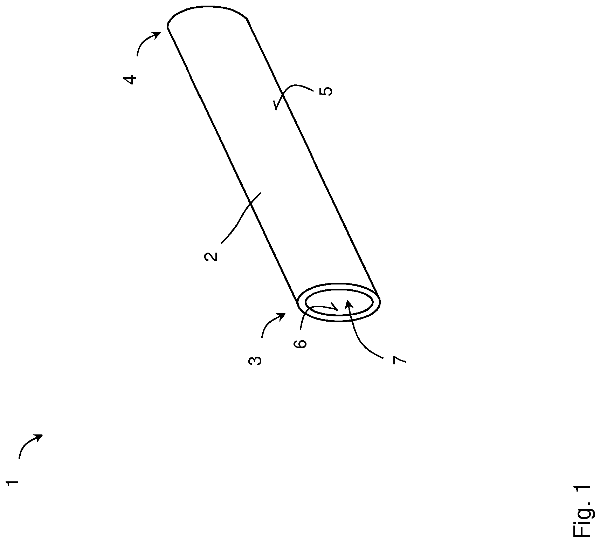

Fig. 1 zeigt eine schematische perspektivische Ansicht eines essbaren Utensils gemäß einem Ausführungsbeispiel. Das essbare Utensil 1 weist einen hohlen im Wesentlichen rohrförmigen Körper 2 mit einem ersten Ende 3 und mit einem dem ersten Ende 3 gegenüberliegenden zweiten Ende 4 auf. Der rohrförmige Körper 2 weist eine im Wesentlichen zylindrisch ausgebildete Außenfläche 5 und eine im Wesentlichen koaxial zu der Außenfläche 5 ausgebildeten Innenfläche 6 auf, wobei die Innenfläche 6 des rohrförmigen Körpers 2 einen Flusskanal 7 bzw. Nahrungsflusskanal definiert.

In dem Ausführungsbeispiel der Fig. 1 weist der rohrförmige Körper 2 eine Länge L von ungefähr 20 cm, einen Außendurchmesser D von ungefähr 1,5 cm und einen Innendurchmesser d von ungefähr 0,8 cm auf. Je nach Ausführungsbeispiel können die Länge L, die Außendurchmesser D und die Innendurchmesser in folgenden Intervallen variieren: 5 cm < L < 25 cm, 0,5 < D < 2 cm, und 0,3 < d < 1,5 cm.

Der rohrförmige Körper 2 weist ein nudelteigbasiertes Material auf. Insbesondere ist in dem Ausführungsbeispiel der Fig. 1 der rohrförmige Körper im Wesentlichen aus einem Nudelteig gefertigt, wobei der Nudelteig einer thermomechanischen Behandlung ausgesetzt worden ist.

Aufgrund der Dimensionierung des rohrförmigen Körpers 2 kann das essbare Utensil 1 als ein Trinkhalm bzw. Strohhalm zur Einnahme einer flüssigen Nahrung verwendet werden, wenn sich die flüssige Nahrung in einem offenen Behälter, beispielsweise in einem Glas befindet. Zur Einnahme der flüssigen Nahrung wird das erste Ende 3 oder das zweite Ende 4 des rohrförmigen Körpers 2 in die zu verzehrende flüssige Nahrung eingetaucht, wobei an dem anderen bzw. an dem freien Ende 4 bzw. 3 des rohrförmigen Körpers zur Erzeugung eines Unterdrucks innerhalb des Flusskanals mit dem Mund angesaugt wird. Der Unterdruck innerhalb des Flusskanals führt dazu, dass der Pegel der flüssigen Nahrung innerhalb des Flusskanals steigt, so dass die flüssige Nahrung von dem Behälter in den Mund des Benutzers befördert werden kann.

Wird der Behälter leer, so kann das Utensil insbesondere restlos verspeist werden. Das essbare Utensil kann außerdem auch bereits vor bzw. während der Einnahme der flüssigen Nahrung wenigstens teilweise verspeist werden. Aufgrund der leichten Bekömmlichkeit kann das Utensil somit als eine willkommene Ergänzung der flüssigen Nahrung dienen. In einigen Ausführungsformen weist das Utensil wenigstens einen Aroma-, Geschmacks-, Farbstoff oder löslichen Zucker bzw. Zuckersirup auf. Durch Aroma-, Geschmacks- und/oder Farbstoffe kann eine Vielfalt an Erfahrungen mit dem essbaren Utensil angeboten werden.

Das essbare Utensil 1 wird auf der Basis einer Maccheroni-Nudel bereitgestellt. Insbesondere wird eine rohe Maccheroni-Nudel bereitgestellt und einer derartigen thermochemischen Behandlung unterzogen, dass das essbare Utensil sowohl während der Einnahme einer flüssigen Nahrung als auch nach der Einnahme einer flüssigen Nahrung wie eine leicht bekömmliche Teigware verzehrbar ist.

Die thermochemische Behandlung umfasst ein Versehen des hohlen rohrförmigen Körpers mit einem Öl bzw. mit einer ölhaltigen Flüssigkeit, wonach der rohrförmige Körper einem Ofen-Schritt unterzogen wird. In dem Ofen-Schritt wird der mit dem Öl versehene rohrförmige Körper in einem Backofen für eine Zeitdauer von 10 bis 30 Minuten bei einer Temperatur von 50 bis 200°C, bevorzugt 180°C, gehalten.

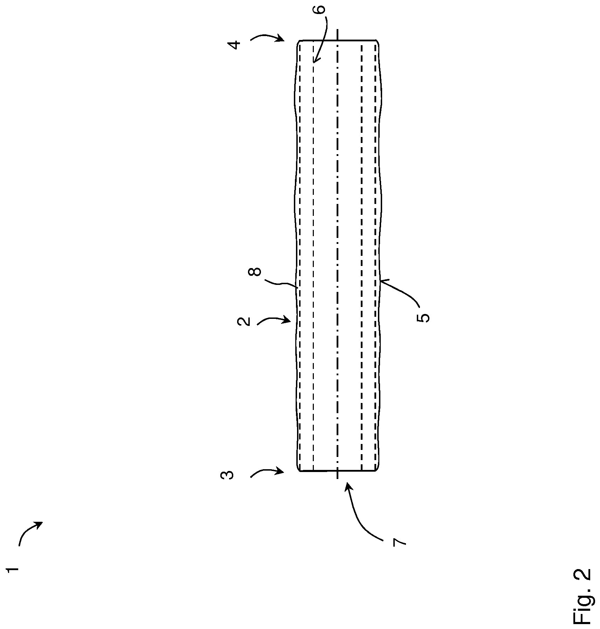

Fig. 2 zeigt einen schematischen Querschnitt eines essbaren Utensils gemäß einem Ausführungsbeispiel. In der schematischen Darstellung der Fig. 2 wird insbesondere der Flusskanal 7 sowie eine Ölbeschichtung 8 an der Außenfläche 5 des rohrförmigen Körpers verdeutlicht.

In der gezeigten Ausführungsform ist die Ölbeschichtung 8 lediglich auf der Außenfläche 5 ausgebildet. Die Ölschicht 8 kann auch, insbesondere zusätzlich, auf der Innenfläche 6 sowie an den die Außenfläche 5 mit der Innenfläche 6 verbindenden Querflächen an dem ersten Ende 3 und/oder an dem zweiten Ende 4 des rohrförmigen Körpers ausgebildet sein.

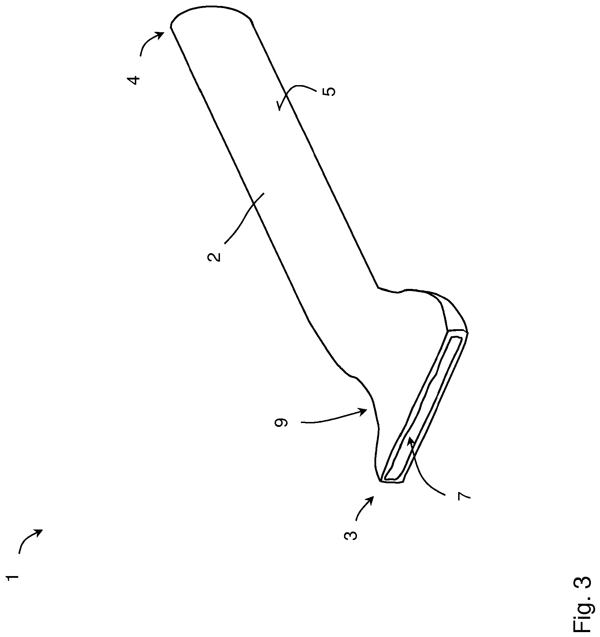

Fig. 3 zeigt eine perspektivische Ansicht eines essbaren Utensils gemäß einem weiteren Ausführungsbeispiel. Das in der Fig. 3 gezeigte essbare Utensil 1 ist im Wesentlichen ähnlich zu den in Figuren 1 und 2 gezeigten Ausführungsformen des essbaren Utensils ausgebildet. Im Unterschied zu den Ausführungsformen der Figuren 1 und 2 weist das essbare Utensil der Fig. 3 an dem ersten Ende 3 eine funktionelle Erweiterung 9 auf, welche in diesem Ausführungsbeispiel als eine Abflachung des hohlen im Wesentlichen rohrförmigen Körpers ausgebildet ist. Durch diese Abflachung des hohlen im Wesentlichen rohrförmigen Körpers wird die Funktionalität des essbaren Utensils dahingehend erweitert, dass das essbare Utensil auch als ein Löffel eingesetzt werden kann. Dies kann insbesondere dann von Vorteil sein, wenn man das essbare Utensil beim Verzehr zähflüssiger Nahrungsmittel, beispielsweise Softeis oder Smoothies, verwendet.

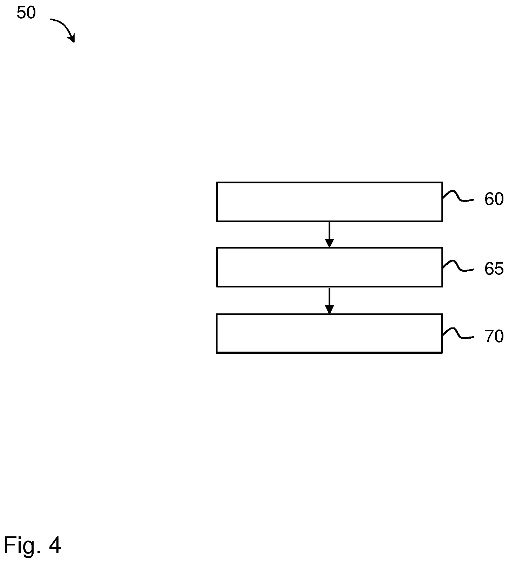

Fig. 4 zeigt ein Flussdiagram eines Verfahrens zur Herstellung eines essbaren Utensils gemäß einem Beispiel.

Gemäß dem Verfahren 50 der Fig. 4 wird in einem ersten Schritt 60 ein hohler, im Wesentlichen rohrförmiger Körper 2 in Form einer rohen Makccheroni-nudel bereitgestellt.

Die rohen Maccheroni-Nudeln haben in der Regel bereits die geeignete Form und Dimensionierung, um als Strohhalm bzw. Trinkhalm verwendet zu werden. Zudem sind die rohen Maccheroni-Nudeln in Nahrungsmittelgeschäften oder bei Großhändlern ohne Weiteres erhältlich.

In einem darauffolgenden Schritt 65 wird der hohle im Wesentlichen rohrförmiger Körper 2 einer chemischen Behandlung ausgesetzt. Die chemische Behandlung umfasst das Einölen bzw. das Versehen des rohrförmigen Körpers 2 mit einem Öl bzw. mit einer ölhaltigen Substanz. Das Einölen bzw. das Versehen des hohlen im Wesentlichen rohrförmigen Körpers 2 mit Öl kann insbesondere das Versehen der Außenfläche 5 des rohrförmigen Körpers 2 mit einer Ölbeschichtung- bzw. mit der ölhaltigen Substanz umfassen. Das Einölen der Außenfläche 5 kann insbesondere durch Bestreichen der Außenfläche 6 mit einem Öl-Pinsel erfolgen.

In einigen Ausführungsformen wird der rohrförmige Körper in einem Ölbad eingetaucht.

Als Öl kann insbesondere ein pflanzliches Speiseöl, wie beispielsweise Sonnenblumenöl, Rapsöl, Olivenöl o.ä. genommen werden. In einigen Ausführungsformen umfasst die chemische Behandlung ein Einwirken des Öls bzw. der ölhaltigen Substanz auf den hohlen im Wesentlichen rohrförmigen Körper für eine vordefinierte Zeit, insbesondere für 5 bis 25 Minuten bei einer vordefinierten Temperatur, insbesondere bei Raumtemperatur (ca. 20°).

In einem darauffolgenden Schritt 70 wird der mit Öl versehene rohrförmige Körper einer thermischen Behandlung ausgesetzt. Die thermische Behandlung umfasst ein Backen des eingeölten Körpers 2, das insbesondere in einem Back-ofen durchgeführt wird.

In einigen Ausführungsformen weist das erste Ende 3 und/oder das zweite Ende 4 des rohrförmigen Körpers eine funktionelle Erweiterung auf.

Die funktionelle Erweiterung kann eine Umformung des ersten Endes 3 und/oder des zweiten Endes 4 umfassen.

Insbesondere kann das erste Ende 3 und/oder das zweite Ende als ein Griff, als Schöpfer und/oder als Schaufel bzw. Löffel umgeformt sein.

In einigen Ausführungsformen ist die funktionelle Erweiterung als ein Zusatzteil bzw. als Aufsatz ausgebildet, der auf das erste Ende 3 bzw. auf das zweite Ende des rohförmigen Körpers aufgesetzt werden kann. Nach einem Aspekt wird eine funktionelle Erweiterung einer Maccheroni-Nudel vorgesehen, der als Aufsatz an einem Ende einer Maccheroni-Nudel ausgebildet ist.

### Bezugszeichenliste

- 1: essbares Utensil
- 2: hohler im Wesentlichen rohrförmiger Körper
- 3: erstes Ende
- 4: zweites Ende
- 5: Außenfläche
- 6: Innenfläche
- 7: Flusskanal
- 8: Beschichtung
- 9: funktionelle Erweiterung

- 50: Verfahren

- 60: Bereitstellen eines rohförmigen Körpers
- 65: chemische Behandlung
- 70: thermische Behandlung

## Patentansprüche

1. Verfahren zur Herstellung eines essbaren Utensils, umfassend:
- Bereitstellen eines länglichen Körpers in Form eines Essutensils, welcher ein Nudelteig- bzw. nudelteigbasiertes Material aufweist, wobei der längliche Körper eine rohe Maccheroni-Nudel ist (60);
- chemische Behandlung des länglichen Körpers (65); und
- nach der chemischen Behandlung des länglichen Körpers, thermische Behandlung des chemisch behandelten länglichen Körpers (70),
wobei das essbare Utensil ein Trinkhalm ist, wobei die chemische Behandlung des länglichen Körpers (65) ein Versehen des länglichen Körpers mit einem Öl oder einer ölhaltigen Substanz umfasst, wobei die thermische Behandlung des länglichen Körpers (70) ein Backen des länglichen Körpers umfasst, und wobei eine derartige Konditionierung des Trinkhalms erreicht wird, dass er sowohl während einer Einnahme einer flüssigen Nahrung als auch nach der Einnahme der Nahrung wie eine leicht bekömmliche Teigware verzehrbar ist.

2. Verfahren nach Anspruch 1, wobei das Versehen des länglichen Körpers mit einem Öl oder einer ölhaltigen Substanz ein Besprühen des länglichen Körpers mit dem Öl umfasst.

3. Verfahren nach Anspruch 1, wobei das Versehen des länglichen Körpers mit einem Öl oder einer ölhaltigen Substanz ein wenigstens teilweises Eintunken und/oder Eintauchen des länglichen Körpers in das Öl umfasst.

4. Verfahren nach einem der Ansprüche 1 bis 3, wobei das Öl mit wenigstens einem Aroma-, Geschmacks-, Farbstoff oder löslichem Zucker versetzt ist.

5. Verfahren nach einem der Ansprüche 1 bis 4, wobei das Verfahren (50) weiter ein Bereitstellen einer funktionellen Erweiterung des essbaren Utensils, insbesondere durch eine Umformung eines ersten Endes und/oder eines zweiten Endes des länglichen Körpers umfasst.

## Claims

1. Method of manufacturing an edible utensil comprising:
- providing an elongate body in the form of an edible utensil comprising a pasta dough-based material, the elongate body being a raw macaroni noodle (60);
- chemically treating the elongate body (65);
- and after chemically treating the elongate body, thermally treating the chemically treated elongate body (70),
wherein the edible utensil is a drinking straw, wherein the chemical treatment of the elongate body (65) comprises providing the elongate body with an oil or oil-containing substance, wherein the thermal treatment of the elongate body (70) comprises baking the elongate body, and wherein conditioning of the drinking straw is achieved such that it is consumable as an easily digestible pastry both during ingestion of a liquid food and after ingestion of the food.

2. Method according to claim 1, wherein providing the elongate body with an oil or an oil-containing substance comprises spraying the elongate body with the oil.

3. Method according to claim 1, wherein providing the elongate body with an oil or an oil-containing substance comprises at least partially dipping and/or immersing the elongate body in the oil.

4. Method according to one of claims 1 to 3, wherein at least one flavouring, flavouring, colouring agent or soluble sugar is added to the oil.

5. Method according to one of claims 1 to 4, wherein the method (50) further comprises providing a functional extension of the edible utensil, in particular by reshaping a first end and/or a second end of the elongate body.

## Revendications

1. Procédé de fabrication d'un ustensile comestible, comprenant :
- la préparation d'un corps allongé sous forme d'un ustensile à manger, lequel présente un matériau de type pâte à nouille, respectivement à base de pâte à nouille, le corps allongé étant une nouille de type macaroni (60) crue ;
- le traitement chimique du corps allongé (65) ; et
- après le traitement chimique du corps allongé, le traitement thermique du corps allongé traité chimiquement (70),
l'ustensile comestible étant une paille à boire, où le traitement chimique du corps allongé (65) comprend l'adjonction d'une huile ou d'une substance contenant de l'huile au corps allongé, où le traitement thermique du corps allongé (70) comprend une cuisson du corps allongé, et où un conditionnement tel de la paille à boire est obtenu qu'elle puisse être consommée comme une pâte facile à digérer que ce soit pendant l'absorption d'un aliment liquide ou après l'absorption de l'aliment.

2. Procédé selon la revendication 1, dans lequel l'adjonction d'une huile ou d'une substance contenant de l'huile au corps allongé comprend une pulvérisation du corps allongé avec l'huile.

3. Procédé selon la revendication 1, dans lequel l'adjonction d'une huile ou d'une substance contenant de l'huile au corps allongé comprend une plongée au moins partielle et/ou une immersion du corps allongé dans l'huile.

4. Procédé selon l'une des revendications 1 à 3, dans lequel l'huile est additionnée d'un arôme, d'un agent de sapidité, d'un colorant ou d'un sucre soluble.

5. Procédé selon l'une des revendications 1 à 4, le procédé (50) comprenant en outre la mise au point d'une extension fonctionnelle de l'ustensile comestible, en particulier par un remodelage d'une première extrémité et/ou d'une seconde extrémité du corps allongé.
